# EUROPEAN PATENT APPLICATION

(11) **EP 4 687 207 A1**
(43) Date of publication of application: **04.02.2026**
(21) Application number: 25190959.4
(22) Date of filing: 22.07.2025
(51) Int. Cl.: H01M 50/213, H01M 50/291, H01M 50/30, H01M 50/367, H01M 50/264, H01M 50/293

(54) **BATTERY PACK**

(30) Priority: 02.08.2024 CN 202421874156 U
(71) Applicant: AESC Japan Ltd., Yokohama-Shi, Kanagawa 220-0012 (JP)
(72) Inventor: WU, Changjun, Pudong New Area Shanghai, 201315 (CN); CUI, Xin, Pudong New Area Shanghai, 201315 (CN); YANG, Xinwei, Pudong New Area Shanghai, 201315 (CN); HE, Yafei, Pudong New Area Shanghai, 201315 (CN)
(74) Representative: Becker, Eberhard

(57) **Abstract**

A battery pack including multiple cells (100), a housing (200), and a support structure (1) is provided. Each cell has a cell explosion-proof valve (110), and the surface where the cell explosion-proof valve (110) of each cell is located is defined as a first cell end surface (120). The cells (100) are all disposed in the housing (200). The support structure (1) is at least partially disposed between an inner surface of the housing (200) and the cells (100) to define an exhaust channel (300) between the support structure (1) and the inner surface of the housing (200). The cells (100) are disposed on the support structure (1), and the first cell end surface (120) faces the support structure (1). A sidewall of the support structure (1) near the first cell end surface (120) is provided with an adhesive storage groove (12).

## Description

### BACKGROUND

### Technical Field

The present disclosure relates to the field of power battery technology, particularly to a battery pack.

### Description of Related Art

In existing technical solutions, a battery pack includes a housing and multiple cells provided within the housing, with each cell having a cell explosion-proof valve. In the case where the cells are columnar cells, the cell explosion-proof valve thereof is located at the bottom of the cells. After the assembly of cells and housing is completed, adhesive is injected into the housing, and there is a risk that the adhesive might block the cell explosion-proof valve during the flow process. After the adhesive that blocks the cell explosion-proof valve is cured, the solidified adhesive might affect the smooth opening of the cell explosion-proof valve when the cell experiences thermal runaway, which causes gas to be blocked inside the cell, resulting in large area rupture or ejection of the positive terminal and other worse conditions, which affects the safety performance of the battery pack.

### SUMMARY

In view of the foregoing, the purpose of the present disclosure is to provide a battery pack, in order to resolve the issue of adhesive obstructing the cell explosion-proof valve, which affects the opening and gas discharge of the cell explosion-proof valve, thereby ensuring the safety performance of the battery pack.

Based on the above purpose, the present disclosure provides a battery pack, including: multiple cells, each having a cell explosion-proof valve, a surface where the cell explosion-proof valve of each cell is located is defined as a first cell end surface; a housing, multiple cells are all disposed in the housing; a support structure, at least partially disposed between the inner surface of the housing and the cells to define an exhaust channel between the support structure and the inner surface of the housing; the cells are disposed on the support structure and the first cell end surface faces the support structure, the support structure is provided with an exhaust vent corresponding to the cell explosion-proof valves, the exhaust vent is communicated with the exhaust channel; a sidewall of the support structure near the first cell end surface is provided with an adhesive storage groove.

Optionally, a sidewall of the support structure away from the exhaust channel is provided with a positioning groove. The first cell end surface is disposed in the positioning groove. The exhaust vent and the adhesive storage groove are both disposed at the bottom of the positioning groove, and the adhesive storage groove is located between the sidewall of the positioning groove and the hole wall of the exhaust vent.

Optionally, the adhesive storage groove surrounds the exhaust vent as a continuous annular groove or an intermittent annular groove.

Optionally, at least one circle of the adhesive storage groove is provided along the radius direction of the exhaust vent.

Optionally, the bottom of the positioning groove has a fitting area. Along the radius direction of the exhaust vent, the fitting area is located between the hole wall of the exhaust vent and the sidewall of the adhesive storage groove adjacent to each other. The first cell end surface at least abuts against the fitting area.

Optionally, the fitting area includes a continuous annular area surrounding the exhaust vent.

Optionally, along a first direction, the orthogonal projection of the cell explosion-proof valves at the bottom of the positioning groove is within the outer contour of the exhaust vent. The first direction is perpendicular to the bottom of the positioning groove.

Optionally, along the radius direction of the exhaust vent, the sidewall of the positioning groove and the sidewall of the adhesive storage groove adjacent to each other are disposed at intervals to construct a support area at the bottom of the positioning groove. The support area is located between the sidewall of the positioning groove and the sidewall of the adhesive storage groove adjacent to each other. The support area is provided for supporting the first cell end surface.

Optionally, the first cell end surface is connected with an adhesive member. The first cell end surface is at least connected with the support area through the adhesive member.

Optionally, a sidewall of the support structure away from the first cell end surface is provided with a protruding structure. The adhesive storage groove extends to the interior of the protruding structure along a first direction. The first direction is perpendicular to the first cell end surface.

As can be seen from the above, for the battery pack provided by the present disclosure, a sidewall of the support structure near the first cell end surface is provided with an adhesive storage groove, even if adhesive flows into the gap between the first cell end surface and the surface of the support structure, at least part of the adhesive flowing into the gap will flow into the adhesive storage groove, and the adhesive flowing into the adhesive storage groove cannot flow towards the cell explosion-proof valves. In this way, it is possible to prevent the adhesive from blocking the cell explosion-proof valves at least to some extent. When the cells undergo thermal runaway, the cell explosion-proof valves may open more smoothly, so that the thermal runaway gas generated by the cells may flow smoothly into the exhaust channel through the cell explosion-proof valves and the exhaust vent, thus avoiding worse conditions such as large area rupture of the cells or ejection of the positive terminal, thereby ensuring the safety performance of the battery pack.

### BRIEF DESCRIPTION OF THE DRAWINGS

In order to explain the technical solutions in the embodiments of the present disclosure or the related art more clearly, a simple introduction will be made below to the drawings needed in the description of the embodiments or the related art. Clearly, the drawings described below are only some embodiments of the present disclosure. For ordinary technicians in the field, other drawings may be obtained based on these drawings without creative efforts.
FIG. 1 is a perspective view of a partial structure of the battery pack according to an embodiment of the present disclosure.
FIG. 2 is a partial sectional view of the battery pack according to an embodiment of the present disclosure.
FIG. 3 is a perspective view of the support structure of the battery pack according to an embodiment of the present disclosure.
FIG. 4 is a perspective view of the cells of the battery pack disposed on the support structure according to an embodiment of the present disclosure.
FIG. 5 is a top view of a sidewall of the support structure of the battery pack away from the exhaust channel according to an embodiment of the present disclosure.
FIG. 6 is a top view of another structure of the sidewall of the support structure of the battery pack away from the exhaust channel according to an embodiment of the present disclosure.
FIG. 7 is an enlarged view of portion A in FIG. 2.

### DESCRIPTION OF THE EMBODIMENTS

To make the purpose, technical solution, and advantages of the present disclosure more comprehensible, the following provides further detailed description of the present disclosure in combination with specific examples and with reference to the accompanying drawings.

It should be noted that: unless otherwise specifically stated, the relative arrangement of elements, numerical expressions, and values described in these examples do not limit the scope of the present disclosure.

At the same time, it should be understood that, for ease of description, the dimensions of the various parts shown in the drawings are not drawn according to actual proportional relationships.

The following description of at least one exemplary example is actually only illustrative and is by no means a limitation on the present disclosure and its applications or uses.

It should be noted that, unless otherwise defined, the technical or scientific terms used in the examples of the present disclosure should be understood in their common meaning by persons with ordinary skill in the field to which this disclosure belongs. The words "first," "second," and similar words used in this disclosure do not indicate any order, quantity, or importance, but are only used to distinguish different elements. Words such as "include" or "comprise" mean that the elements or objects preceding these words encompass the elements or objects listed after these words and their equivalents, without excluding other elements or objects. Words such as "connect" or "interconnect" are not limited to physical or mechanical connections, but may include electrical connections, whether direct or indirect. "Up," "down," "left," "right," and so on are only used to indicate relative positional relationships, and when the absolute position of the described object changes, these relative positional relationships may also change accordingly.

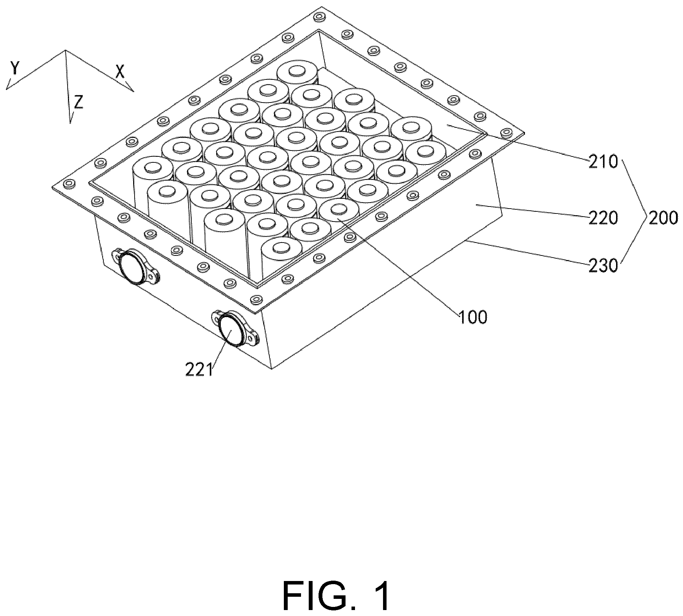

As shown in FIG. 1, FIG. 1 shows a perspective view of a partial structure of a battery pack. The battery pack may include a housing 200. The housing 200 may include a base panel 230 and four side panels 220 connected to the edge of the base panel 230. The base panel 230 and the four side panels 220 together define an accommodating space 210 located inside the housing 200. The battery pack further includes multiple cells 100 provided in the accommodating space 210. The cells 100 may be columnar cells.

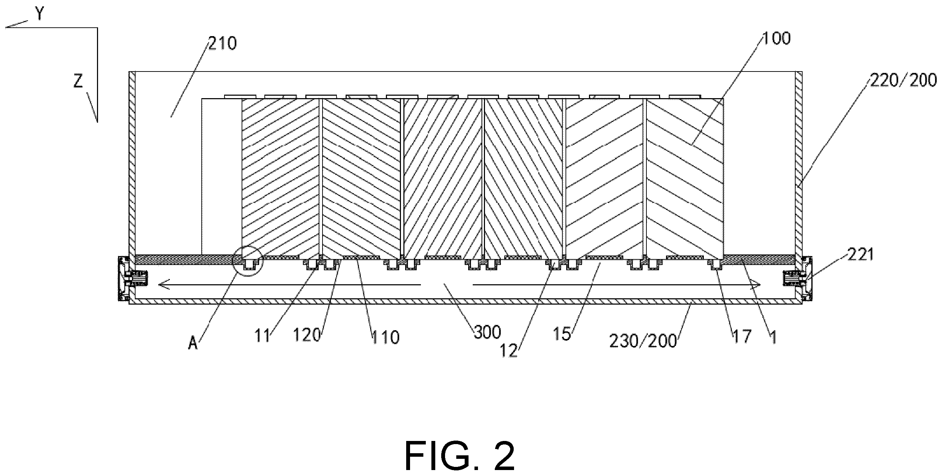

As shown in FIG. 1, the side panel 220 of the housing 200 is provided with a housing explosion-proof valve 221. As shown in FIG. 2, FIG. 2 shows a partial sectional view of the battery pack. When the cells 100 are columnar cells, the cell explosion-proof valves 110 thereof may be located at the bottom of the cells 100 and near the base panel 230 of the housing 200. When the cells 100 experience thermal runaway, the housing explosion-proof valve 221 will open, and the thermal runaway gas ejected from the cell explosion-proof valves 110 will flow towards the direction of the housing explosion-proof valve 221, and be discharged outside the housing 200 through the housing explosion-proof valve 221.

After the cells 100 are disposed in the accommodating space 210 of the housing 200, adhesive needs to be poured into the accommodating space 210 to package the cells 100 inside the housing 200. The applicant has found through research that due to the gap between the bottom of the cells 100 and the surface of the structure supporting the cells 100, the adhesive might flow into this gap after entering the accommodating space 210 and spread to the cell explosion-proof valves 110, blocking the cell explosion-proof valves 110. After being cured, the adhesive blocking the cell explosion-proof valves 110 will connect with the bottom of the cells 100 and form a structure with strength. When the cells 100 experience thermal runaway, the structure formed by the adhesive blocking the cell explosion-proof valves 110 will hinder the smooth opening of the cell explosion-proof valves 110, which might cause thermal runaway gas to be blocked inside the cells 100, possibly resulting in large area rupture of the cells 100 or ejection of the positive terminal and other worse conditions, affecting the safety performance of the battery pack.

In view of this, as shown in FIG. 2, in some examples, the battery pack includes a housing 200, a support structure 1, and multiple cells 100. Each cell 100 has a cell explosion-proof valve 110, and the surface where the cell explosion-proof valve 110 of each cell 100 is located is defined as a first cell end surface 120. Multiple cells 100 are all disposed in the housing 200. The support structure 1 is at least partially disposed between the inner surface of the housing 200 and the cells 100 to define an exhaust channel 300 between the support structure 1 and the inner surface of the housing 200. The cells 100 are disposed on the support structure 1 with the first cell end surface 120 facing the support structure 1. The support structure 1 is provided with an exhaust vent 15 corresponding to the cell explosion-proof valves 110. The exhaust vent 15 is communicated with the exhaust channel 300. A sidewall of the support structure 1 near the first cell end surface 120 is provided with an adhesive storage groove 12.

Exemplarily, along the axial direction of the cells 100 (such as the Z direction in FIG. 2), the orthogonal projection of the adhesive storage groove 12 on the first cell end surface 120 is within the outer contour of the first cell end surface 120. With reference to the above description, it is known that what affects the smooth opening of the cell explosion-proof valves 110 is the adhesive flowing into the gap (hereinafter referred to as the cell gap) between the first cell end surface 120 and the surface of the support structure 1, so the adhesive storage groove 12 should also be provided for this part of adhesive. In other words, if the adhesive flowing into the adhesive storage groove 12 is the adhesive flowing into the cell gap, then the space of the adhesive storage groove 12 accommodating this part of adhesive is effectively utilized space. If the adhesive flowing into the adhesive storage groove 12 is adhesive outside the cell gap, then the space of the adhesive storage groove 12 accommodating this part of adhesive is ineffectively utilized space. The more adhesive flowing into the cell gap is accommodated in the adhesive storage groove 12, the higher the effective utilization rate of the adhesive storage groove 12. If the adhesive storage groove 12 is located within the range of the first cell end surface 120, it may be ensured that the adhesive flowing into the adhesive storage groove 12 is all of the adhesive flowing into the cell gap.

Exemplarily, the connection between the cells 100 and the support structure 1 may be a fixed connection or a detachable connection.

Exemplarily, the starting point of the exhaust channel 300 may be the cell explosion-proof valve 110 of each cell 100, and the end point may be the housing explosion-proof valve 221.

Exemplarily, the support structure 1 may abut against the inner bottom surface of the housing 200, or abut against a protruding structure disposed on the inner sidewall of the housing 200 to fix the position of the support structure 1 in the accommodation space 210.

Exemplarily, the exhaust channel 300 is located between the support structure 1 and the inner bottom surface of the housing 200, and/or the exhaust channel 300 is located between the support structure 1 and the inner sidewall surface of the housing 200.

Although the cells 100 are disposed on the support structure 1, and the first cell end surface 120 faces the support structure 1, due to the inevitable flatness (i.e., the deviation of the macroscopic concave-convex height on the surface of the support structure 1 relative to the ideal plane) on the surface of the support structure 1, there will still be a cell gap between the first cell end surface 120 and the surface of the support structure 1. In order to block the adhesive flowing into the cell gap, the present embodiment provides the adhesive storage groove 12 on a sidewall of the support structure 1 near the first cell end surface 120. During the process of the adhesive flowing into the cell gap and flowing towards the cell explosion-proof valves 110, at least part of the adhesive will flow into the adhesive storage groove 12, thereby achieving the purpose of preventing the adhesive from blocking the cell explosion-proof valves 110.

The battery pack provided by the embodiments of the present disclosure provides an adhesive storage groove 12 on a sidewall of the support structure 1 near the first cell end surface 120. Even if adhesive flows into the gap between the first cell end surface 120 and the surface of the support structure 1, at least part of the adhesive flowing into the gap will flow into the adhesive storage groove 12, and the adhesive that flows into the adhesive storage groove 12 cannot flow towards the cell explosion-proof valves 110, thereby preventing the adhesive from blocking the cell explosion-proof valves 110 to at least some extent. When the cells 100 experience thermal runaway, the cell explosion-proof valves 110 may open more smoothly, allowing the thermal runaway gas generated by the cells 100 to flow smoothly into the exhaust channel 300 through the cell explosion-proof valves 110 and the exhaust vent 15, thus avoiding worse conditions such as large area rupture of the cells 100 or ejection of the positive terminal, and thereby ensuring the safety performance of the battery pack.

As shown in FIG. 2, in some embodiments, a sidewall of the support structure 1 away from the exhaust channel 300 is provided with a positioning groove 11. The first cell end surface 120 is disposed in the positioning groove 11, and the first cell end surface 120 abuts against the bottom of the positioning groove 11. The exhaust vent 15 and the adhesive storage groove 12 are both disposed at the bottom of the positioning groove 11, and the adhesive storage groove 12 is located between the sidewall of the positioning groove 11 and the hole wall of the exhaust vent 15.

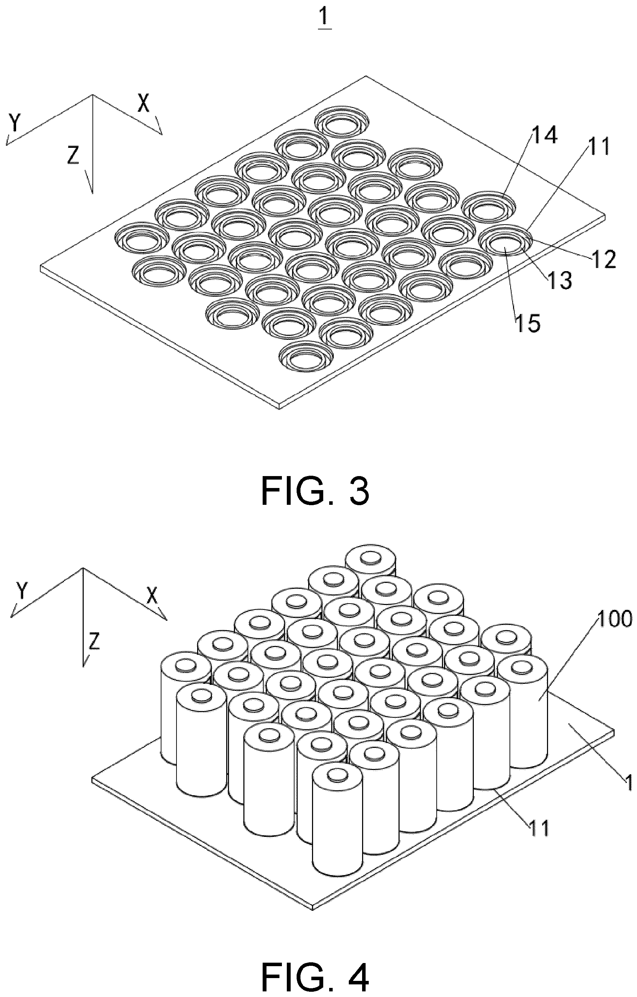

Exemplarily, as shown in FIG. 3, FIG. 3 shows a perspective view of the support structure 1. Along the radius direction (for example, the X direction or Y direction in FIG. 3) of the positioning groove 11, the cross-sectional shape of the positioning groove 11 may be circular or polygonal, and the diameter of the circle or the diameter of the inscribed circle of the polygon is not less than the diameter of the first cell end surface 120.

Exemplarily, as shown in FIG. 4, FIG. 4 shows a perspective view of the cells 100 disposed on the support structure 1. The cells 100 and the positioning groove 11 of the support structure 1 may be removably connected through insertion or engagement, etc., or fixedly connected through bonding and so on.

Exemplarily, the axial direction of the exhaust vent 15 is parallel to the thickness direction (such as the Z direction in FIG. 3) of the support structure 1.

Setting a positioning groove 11 on a sidewall of the support structure 1 away from the exhaust channel 300 allows the cells 100 to be directly disposed on the support structure 1 through the positioning groove 11, which not only facilitates assembly but also ensures that the configuration position of the cells 100 on the support structure 1 meets the design requirements.

In the meantime, after the cells 100 are disposed in the positioning groove 11, since the position of the first cell end surface 120 in the positioning groove 11 is relatively fixed, setting the exhaust vent 15 at the bottom of the positioning groove 11 may help ensure that the positions of the exhaust vent 15 and the cell explosion-proof valves 110 relative to each other meets the design requirements, ensuring that the cell explosion-proof valves 110 can open smoothly, and also ensuring that the thermal runaway gas discharged from the cell explosion-proof valves 110 can smoothly enter the exhaust channel 300 through the exhaust vent 15.

Similarly, since the position of the first cell end surface 120 in the positioning groove 11 is relatively fixed, setting the adhesive storage groove 12 also at the bottom of the positioning groove 11 may help ensure that the positions of the adhesive storage groove 12 and the first cell end surface 120 relative to each other meets the design requirements, helping to ensure that the adhesive flowing into the adhesive storage groove 12 is all of the adhesive flowing into the cell gap, which helps improve the effective utilization rate of the adhesive storage groove 12.

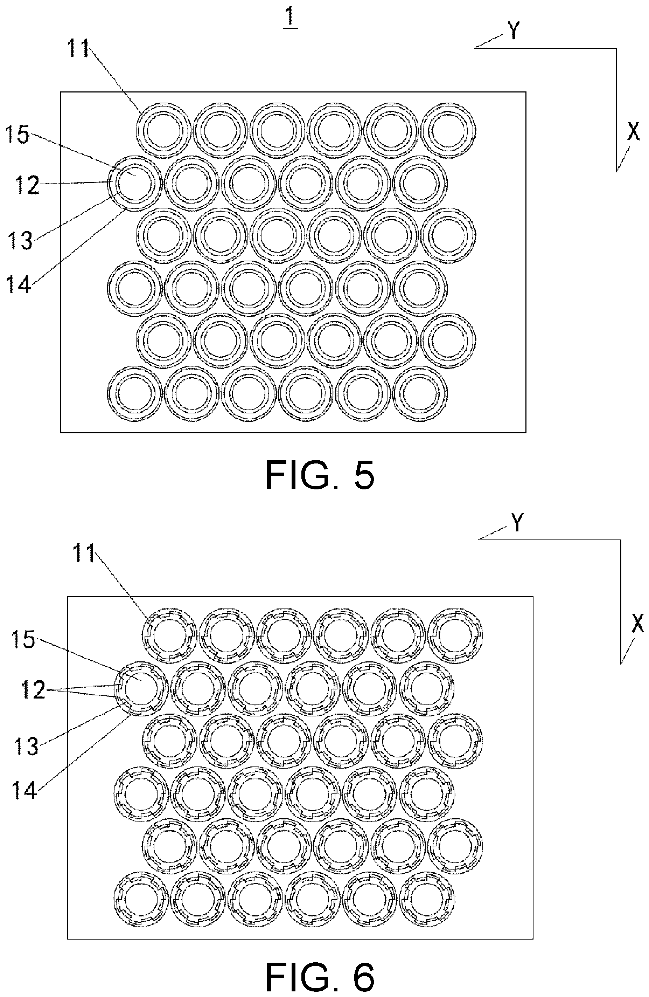

As shown in FIG. 5, FIG. 5 shows a top view of the sidewall of the support structure 1 away from the exhaust channel 300. In some examples, the adhesive storage groove 12 surrounds the exhaust vent 15 as a continuous annular groove.

Exemplarily, the adhesive storage groove 12 may be a continuous circular annular groove, or a continuous polygonal annular groove.

When the adhesive storage groove 12 is a continuous annular groove, regardless of which direction the adhesive enters the cell gap from, the adhesive will be intercepted by the adhesive storage groove 12, so it is possible to effectively prevent the adhesive from blocking the cell explosion-proof valves 110.

As shown in FIG. 6, FIG. 6 shows a top view of another structure of the sidewall of the support structure 1 away from the exhaust channel 300. In some examples, the adhesive storage groove 12 surrounds the exhaust vent 15 as an intermittent annular groove.

Exemplarily, the intermittent annular groove is evenly distributed around the exhaust vent 15.

When the adhesive storage groove 12 is an intermittent annular groove, the recessed parts may intercept the adhesive flowing into the cell gap, preventing the adhesive from blocking the cell explosion-proof valves 110. The parts between two adjacent recesses may effectively support the first cell end surface 120 of the cells 100, ensuring that the cells 100 are relatively stable in the positioning groove 11.

As shown in FIG. 5, in some examples, at least one circle of the adhesive storage groove 12 is provided along the radius direction (for example, the X direction or Y direction in FIG. 5) of the exhaust vent 15.

Exemplarily, as shown in FIG. 5, a circle of the adhesive storage groove 12 may be provided.

Exemplarily, as shown in FIG. 6, two or more circles of the adhesive storage groove 12 may be provided.

Exemplarily, when at least two circles of the adhesive storage groove 12 are provided, the at least two circles of adhesive storage groove 12 may all be continuous annular grooves, or, the at least two circles of adhesive storage groove 12 may all be intermittent annular grooves, or, a portion of the adhesive storage groove 12 may be a continuous annular groove while another portion of the adhesive storage groove 12 may be an intermittent annular groove.

Exemplarily, as shown in FIG. 6, when at least two circles of the adhesive storage groove 12 are provided, and all are intermittent annular grooves, the recessed parts of the adhesive storage groove 12 may be arranged in a staggered manner.

The more circles of adhesive storage groove 12 are provided, the longer the flow path of the adhesive reaching the cell explosion-proof valves 110 along the radius direction of the positioning groove 11, making it more difficult for the adhesive to flow to the cell explosion-proof valves 110, which helps to further reduce the risk of the adhesive flowing into the cell gap and blocking the cell explosion-proof valves 110.

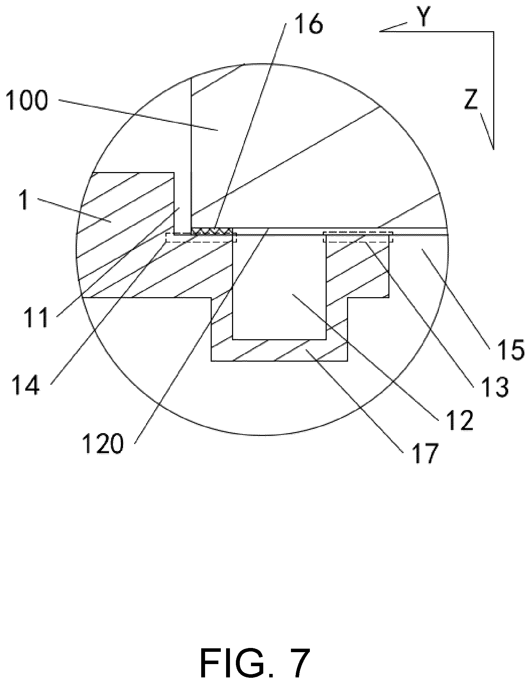

As shown in FIG. 7, FIG. 7 is an enlarged view of portion A in FIG. 2. In some examples, there is a fitting area 13 at the bottom of the positioning groove 11. Along the radius direction (for example, the Y direction in FIG. 7) of the exhaust vent 15, the fitting area 13 is located between the hole wall of the exhaust vent 15 and the sidewall of the adhesive storage groove 12 adjacent to each other. The first cell end surface 120 at least abuts against the fitting area 13.

Exemplarily, the length of the fitting area 13 may be 4mm to 7mm along the radius direction of the exhaust vent 15.

By setting the fitting area 13 between the sidewall of the adhesive storage groove 12 and the hole wall of the exhaust vent 15, when the adhesive fills the adhesive storage groove 12 completely, the fitting area 13 may prevent the adhesive from overflowing towards the direction of the exhaust vent 15. This is because the first cell end surface 120 abuts against the fitting area 13, so the height of the gap between the first cell end surface 120 and the surface of the fitting area 13 is small along the direction (such as the Z direction in FIG. 7) perpendicular to the bottom of the positioning groove 11, making it difficult for the adhesive to enter this gap. Correspondingly, it is also difficult for the adhesive to pass through the fitting area 13 to reach the exhaust vent 15 and block the cell explosion-proof valves 110, so it is possible to effectively reduce the risk of the adhesive overflowing from the adhesive storage groove 12 and blocking the cell explosion-proof valves 110.

In the meantime, the length of the fitting area 13 along the radius direction of the exhaust vent 15 may be designed to be longer, thereby extending the flow path of the adhesive reaching the exhaust vent 15. In this way, it is possible to further reduce the risk of the adhesive overflowing from the adhesive storage groove 12 as well as passing through the fitting area 13 and blocking the cell explosion-proof valves 110.

As shown in FIG. 5, in some examples, the fitting area 13 includes a continuous annular area surrounding the exhaust vent 15.

Exemplarily, the width of various positions of the fitting area 13 may be the same or different along the circumferential direction of the fitting area 13.

When the fitting area 13 is a continuous annular area, the fitting area 13 may serve to block the adhesive at various positions around the circumference of the exhaust vent 15. Regardless of which direction the adhesive overflows from the adhesive storage groove 12, the adhesive needs to pass through the fitting area 13 to reach the exhaust vent 15. The continuous arrangement of the fitting area 13 around the exhaust vent 15 helps reduce the risk of the adhesive overflowing from the adhesive storage groove 12 and blocking the cell explosion-proof valves 110.

As shown in FIG. 2, in some examples, along the first direction (such as the Z direction in FIG. 2), the orthogonal projection of the cell explosion-proof valves 110 at the bottom of the positioning groove 11 is located within the outer contour of the exhaust vent 15. The first direction is perpendicular to the bottom of the positioning groove 11.

When the orthogonal projection of the cell explosion-proof valves 110 at the bottom of the positioning groove 11 is located within the outer contour of the exhaust vent 15, it is possible to ensure that the fitting area 13 will not block the cell explosion-proof valves 110. When the cells 100 experience thermal runaway, the cell explosion-proof valves 110 located within the opening range of the exhaust vent 15 may open smoothly, allowing the thermal runaway gas inside the cells 100 to enter the exhaust vent 15 through the cell explosion-proof valves 110.

As shown in FIG. 7, in some examples, along the radius direction (for example, the Y direction in FIG. 7) of the exhaust vent 15, the sidewall of the positioning groove 11 and the sidewall of the adhesive storage groove 12 adjacent to each other are disposed at intervals, so as to construct a support area 14 at the bottom of the positioning groove 11. The support area 14 is located between the sidewall of the positioning groove 11 and the sidewall of the adhesive storage groove 12 adjacent to each other, and the support area 14 is configured to support the first cell end surface 120.

Exemplarily, the support area 14 may be a continuous annular area surrounding the adhesive storage groove 12.

Exemplarily, along the thickness direction (such as the Z direction in FIG. 7) of the support structure 1, the height of the surface of the support area 14 is not higher than the height of the surface of the fitting area 13, so as to ensure that the first cell end surface 120 can abut against the fitting area 13.

Combined with the above description, it is known that the fitting area 13 may support the cells 100 on one side of the adhesive storage groove 12 near the exhaust vent 15. In order to ensure that the bottom of the positioning groove 11 is able to provide reliable and stable support to the cells 100, the present embodiment provides a support area 14 on one side of the adhesive storage groove 12 away from the exhaust vent 15. The support area 14 may also provide support to the cells 100, and the support area 14 and the fitting area 13 are located on opposite sides of the adhesive storage groove 12. In this way, it is possible to ensure that the cells 100 are stably disposed in the positioning groove 11, avoiding the enlargement of the cell gap in a specific direction due to the inclination of the cells 100 in the positioning groove 11.

As shown in FIG. 7, in some examples, the first cell end surface 120 is connected with an adhesive member 16, and the first cell end surface 120 is at least connected with the support area 14 through the adhesive member 16. Of course, the first cell end surface 120 may also be connected with the fitting area 13 through the adhesive member 16.

Exemplarily, the adhesive member 16 may be formed by curable fluid adhesive, or formed by solid adhesive.

Exemplarily, the adhesive member 16 may be formed by a structural adhesive.

Exemplarily, the adhesive member 16 may be a continuous annular structure or an intermittent annular structure surrounding the adhesive storage groove 12.

After the cells 100 are disposed into the positioning groove 11, the first cell end surface 120 may compress the adhesive member 16, so that the adhesive member 16 is connected with the support area 14, thereby improving the connection stability between the cells 100 and the support structure 1. In the meantime, the adhesive member 16 may also be provided to seal the cell gap, so as to further reduce the risk of adhesive flowing into the cell gap and blocking the cell explosion-proof valves 110.

It should also be noted that when the adhesive member 16 is a curable fluid adhesive, there is no need to precisely control the dosage when applying the fluid adhesive on the first cell end surface 120. When the cells 100 are pressed into the positioning groove 11, if the fluid adhesive is squeezed out of the support area 14 and flows towards the exhaust vent 15, then the fluid adhesive may enter the adhesive storage groove 12, and will not adversely affect the opening of the cell explosion-proof valves 110. If the fluid adhesive flows towards the wall of the positioning groove 11, then the fluid adhesive may seal the gap upward between the wall of the positioning groove 11 and the sidewall of the cells 100 on the circumference. After the fluid adhesive is cured, it may also block the adhesive that packages the cells 100, further reducing the risk of adhesive blocking the cell explosion-proof valves 110. The adhesive for packaging the cells 100 may be foam adhesive.

As shown in FIG. 7, in some embodiments, a sidewall of the support structure 1 away from the first cell end surface 120 is provided with a protruding structure 17. Along the first direction (such as the Z direction in FIG. 7), the adhesive storage groove 12 extends to the interior of the protruding structure 17.

In order to further reduce the risk of adhesive blocking the cell explosion-proof valve 110, the capacity of the adhesive storage groove 12 may be increased. However, since the dimension of the cell explosion-proof valves 110 and the outer dimension of the cells 100 are relatively fixed, it is difficult to increase the width of the adhesive storage groove 12 along the radius direction of the positioning groove 11. Accordingly, the depth of the adhesive storage groove 12 may be increased.

Since the adhesive storage groove 12 is disposed at the bottom of the positioning groove 11, in order to increase the depth of the adhesive storage groove 12, it is necessary to increase the thickness of the support structure 1. However, if the overall thickness of the support structure 1 is increased, it will not only make the cost of the support structure 1 higher, but also occupy the space of the exhaust channel 300. To solve the above problems, the thickness of the support structure 1 may be increased only at the position corresponding to the adhesive storage groove 12, that is, by providing the protruding structure 17. After the adhesive storage groove 12 extends to the interior of the protruding structure 17, the adhesive storage groove 12 may have a greater depth, making it difficult for the adhesive entering the cell gap to completely fill the adhesive storage groove 12, and correspondingly, it is also not easy for the adhesive to flow towards the cell explosion-proof valves 110, thus preventing the adhesive from blocking the cell explosion-proof valves 110.

In the present disclosure, each example is described in a progressive manner, with each example focusing on the differences from other examples, and the same or similar parts between the examples can be cross-referenced.

The description of the present disclosure is given for the purpose of example and description, and is not exhaustive or limiting the application to the disclosed form. Many modifications and variations are apparent to ordinary technicians in the art. The selection and description of examples are to better explain the principles and practical applications of the present disclosure, and to enable ordinary technicians in the art to understand the present disclosure and design various examples with various modifications suitable for specific uses.

## Claims

1. A battery pack, comprising:
a plurality of cells (100), wherein each of the plurality of cells (100) has a cell explosion-proof valve (110), and a surface where the cell explosion-proof valve (110) of each of the plurality of cells (100) is located is defined as a first cell end surface (120);
a housing (200), wherein the plurality of cells (100) are all disposed in the housing (200); and
a support structure (1), at least partially disposed between an inner surface of the housing (200) and the plurality of cells (100) to define an exhaust channel (300) between the support structure (1) and the inner surface of the housing (200), wherein the plurality of cells (100) are disposed on the support structure (1) and the first cell end surface (120) faces the support structure (1), the support structure (1) is provided with an exhaust vent (15) corresponding to the cell explosion-proof valves (110), the exhaust vent (15) is communicated with the exhaust channel (300), and the battery pack is **characterized in that** a sidewall of the support structure (1) near the first cell end surface (120) is provided with an adhesive storage groove (12).

2. The battery pack according to claim 1, wherein a sidewall of the support structure (1) away from the exhaust channel (300) is provided with a positioning groove (11), the first cell end surface (120) is disposed in the positioning groove (11), the exhaust vent (15) and the adhesive storage groove (12) are both disposed at a bottom of the positioning groove (11), and the adhesive storage groove (12) is located between a sidewall of the positioning groove (11) and a hole wall of the exhaust vent (15).

3. The battery pack according to claim 1, wherein the adhesive storage groove (12) surrounds the exhaust vent (15) as a continuous annular groove or an intermittent annular groove.

4. The battery pack according to claim 3, wherein at least one circle of the adhesive storage groove (12) is provided along a radius direction of the exhaust vent (15).

5. The battery pack according to claim 2, wherein the bottom of the positioning groove (11) has a fitting area (13), along a radius direction of the exhaust vent (15), the fitting area (13) is located between the hole wall of the exhaust vent (15) and a sidewall of the adhesive storage groove (12) adjacent to each other, and the first cell end surface (120) at least abuts against the fitting area (13).

6. The battery pack according to claim 5, wherein the fitting area (13) comprises a continuous annular area surrounding the exhaust vent (15).

7. The battery pack according to claim 5, wherein along a first direction, an orthogonal projection of the cell explosion-proof valves (110) at the bottom of the positioning groove (11) is within an outer contour of the exhaust vent (15), and the first direction is perpendicular to the bottom of the positioning groove (11).

8. The battery pack according to claim 2, wherein along a radius direction of the exhaust vent (15), the sidewall of the positioning groove (11) and a sidewall of the adhesive storage groove (12) adjacent to each other are disposed at intervals to construct a support area (14) at the bottom of the positioning groove (11), the support area (14) is located between the sidewall of the positioning groove (11) and the sidewall of the adhesive storage groove (12) adjacent to each, and the support area (14) is provided for supporting the first cell end surface (120).

9. The battery pack according to claim 8, wherein the first cell end surface (120) is connected with an adhesive member (16), and the first cell end surface (120) is at least connected with the support area (14) through the adhesive member (16).

10. The battery pack according to claim 1, wherein a sidewall of the support structure (1) away from the first cell end surface (120) is provided with a protruding structure (17), the adhesive storage groove (12) extends to an interior of the protruding structure (17) along a first direction, and the first direction is perpendicular to the first cell end surface (120).
